# FASCICULE DE BREVET EUROPEEN

(11) **EP 0 502 777 B1**
(45) Date de publication et mention de la délivrance du brevet: **22.05.1996**
(21) Numéro de dépôt: 92400539.0
(22) Date de dépôt: 03.03.1992
(51) Int. Cl.: H04N 5/272, H04N 5/275, H04N 9/75

(54) **Extraction de zones d'avant-plan par rapport à un fond par différence de deux images**
Ausscheidung von Vordergrund-Bereichen mit Rücksicht auf einen Hintergrund aus der Differenz von zwei Bildern
Extraction of foreground areas with regard to a background by difference of two images

(30) Priorité: 05.03.1991 FR 9102604
(43) Date de publication de la demande: 09.09.1992
(73) Titulaire: THOMSON BROADCAST, F-95800 Saint-Christophe (FR)
(72) Inventeur: Florant, Olivier, F-92045 Paris la Défense (FR)
(74) Mandataire: Ruellan-Lemonnier, Brigitte

(56) Documents cités:
- FR-A- 2 549 327
- FR-A- 2 609 817
- US-A- 3 746 782
- US-A- 4 798 437
- PATENT ABSTRACTS OF JAPAN, vol. 13, no. 18 (E-704), 17 janvier 1989;& JP-A-63 224 557 (SEIKO EPSON CO.) 19.09.1988

## Description

L'invention concerne un procédé et un dispositif permettant d'obtenir une information de profondeur dans le champ vu par un dispositif de prise de vue afin de pouvoir délimiter, dans une image, des zones d'avant plan par rapport à un fond.

L'invention s'applique notamment au domaine de la télévision et du cinéma.

L'industrie de la télévision utilise très souvent un dispositif de trucage permettant d'extraire d'un fond coloré de couleur la plus uniforme possible des éléments d'image pourvu que ceux-ci ne contiennent pas les couleurs utilisées dans le fond. On appelle ces différents dispositifs des "chromakey".

Bien souvent la limitation apportée par la nécessité d'avoir une couleur de fond uniforme rend impossible certains trucages, et il serait souhaitable de disposer d'une information de profondeur concernant l'image qui puisse délimiter de façon très précise la frontière entre un sujet d'avant plan et des arrière-plans ou des fonds, quelle que soit la variété des couleurs avec lesquelles ils apparaissent sur l'image.

La présente invention permet de procurer cette information de profondeur dans le champ vu par un dispositif de prise de vue et permet ainsi de décider si un point de l'image appartient à l'avant plan ou au fond.

Selon l'invention, le procédé permettant d'obtenir une information de profondeur dans le champ vu par un dispositif de prise de vue consiste :
- à extraire, d'une prise de vue, deux images d'une scène éclairée comportant des zones d'avant plan et des zones d'arrière plan, la profondeur de champ vue par le dispositif de prise de vue étant plus grande pour la première image que pour la deuxième image,
- à extraire, de chaque image, des composantes hautes fréquences caractéristiques de la netteté des images, de façon à obtenir deux signaux hautes fréquences,
- à comparer les deux signaux hautes fréquences pour obtenir, par différence, un signal de profondeur.

D'autres particularités et avantages de l'invention apparaîtront clairement dans la description suivante donnée à titre d'exemple non limitatif et faite en regard des figures annexées qui représentent :
- la figure 1, un dispositif de prise de vue délivrant une image d'une scène éclairée et un signal de profondeur, selon l'invention,
- la figure 2, un premier exemple de réalisation d'un dispositif de calcul du signal de profondeur,
- la figure 3, un deuxième exemple de réalisation d'un dispositif de calcul du signal de profondeur,
- la figure 4, un premier mode de réalisation d'un dispositif optique, selon l'invention,
- la figure 5, un deuxième mode de réalisation d'un dispositif optique, selon l'invention,
- la figure 6, un exemple de dispositif optique comportant un dispositif de mesure télémétrique, selon l'invention.

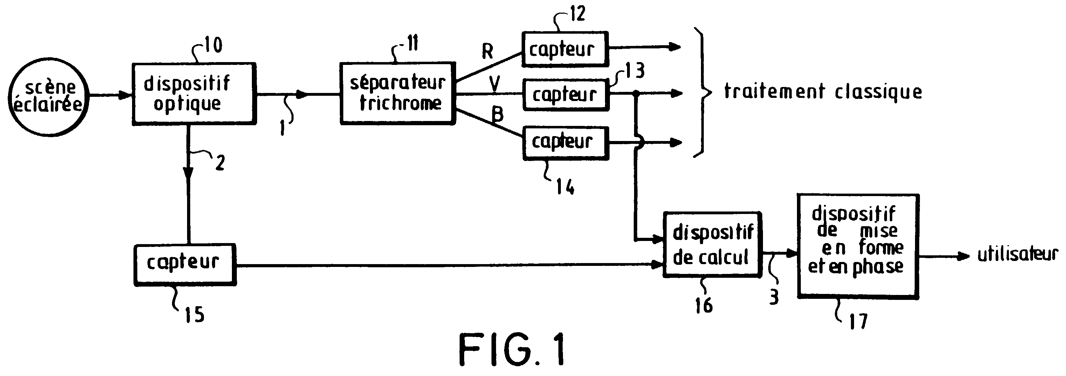

La figure 1 représente un dispositif de prise de vue délivrant une image d'une scène éclairée et un signal de profondeur, selon l'invention.

La scène éclairée comporte des zones d'avant plan et des zones d'arrière plan. Le dispositif de prise de vue comprend un dispositif optique 10 recevant en entrée des rayons lumineux réfléchis par la scène éclairée et délivrant en sortie, pour une même prise de vue, deux signaux optiques :
- un premier signal optique 1, correspondant à une première image de la scène éclairée, dans le domaine des fréquences visibles ; ce premier signal optique est obtenu avec une mise au point réglée sur des zones d'avant plan et une profondeur de champ suffisamment grande pour que l'image soit uniformément nette,
- un deuxième signal optique 2 correspondant à une deuxième image de la même scène éclairée, dans un domaine de fréquences à bande étroite Δ f autour d'une fréquence centrale fc située indifféremment dans le domaine visible ou dans le domaine proche infra-rouge. Ce deuxième signal optique est obtenu avec une mise au point identique à celle de la première image mais avec une profondeur de champ réduite par rapport à la première image. Cette deuxième image comporte donc des zones d'avant plan nettes et des zones d'arrière plan floues.

Le signal optique 2 est transmis directement du dispositif optique 10 vers un capteur 15 qui délivre en sortie le signal électrique correspondant.

La bande de fréquence Δ f est suffisamment étroite pour que le flou de l'image soit dû uniquement à la faible profondeur de champ et non pas à des aberrations chromatiques, mais il faut également qu'elle comporte suffisamment d'énergie lumineuse pour pouvoir utiliser pleinement la sensibilité du capteur 15.

La scène est éclairée par un dispositif d'éclairage permettant de donner à l'image renvoyée par les sujets de la scène, l'énergie suffisante pour la sensibilité du capteur 15 utilisé.

Le signal optique 1 qui constitue le signal principal, est transmis à un séparateur trichrome 11 qui sépare les trois composantes spectrales rouge, R, vert, V, bleu, B, de l'image visible. Les sorties R, V, B du séparateur trichrome sont respectivement reliées à trois capteurs 12, 13, 14 qui délivrent en sortie, sur trois voies différentes, les trois signaux électriques primaires correspondant aux trois couleurs rouge, vert et bleu de l'image visible.

Deux traitements différents sont ensuite effectués parallèlement afin d'une part, de reconstituer l'image de la scène éclairée et, d'autre part, d'obtenir un signal de profondeur.

L'image de la scène éclairée est obtenue par un traitement classique des trois signaux électriques primaires délivrés par les capteurs 12, 13 et 14.

Le signal de profondeur est obtenu en utilisant d'une part, un ou plusieurs signaux électriques primaires et, d'autre part, le signal électrique issu du capteur 15.

Sur la figure 1, un seul signal électrique primaire est utilisé ; c'est le signal de sortie du capteur 13 correspondant à la couleur verte. Il est, bien sûr, possible d'utiliser la couleur rouge ou la couleur bleue. Les signaux de sortie des capteurs 13 et 15 sont transmis à un dispositif de calcul, 16, qui délivre en sortie un signal de profondeur 3. Ce signal de profondeur est ensuite transmis vers un dispositif, 17, de mise en forme et en phase avant utilisation. Le calcul d'un signal de profondeur peut être effectué pour chaque couleur primaire si cela se révèle nécessaire.

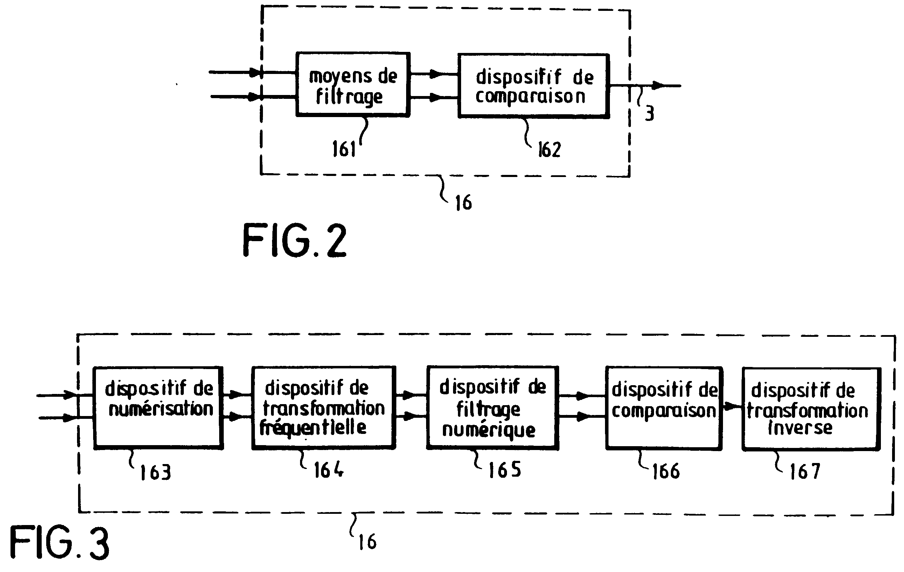

La figure 2 montre un premier exemple de réalisation du dispositif de calcul du signal de profondeur.

Dans ce dispositif de calcul 16, le signal de sortie du capteur 15 et le signal de sortie de l'un des capteurs 12, 13, 14 sont traités analogiquement de la façon suivante.

Ils sont d'abord transmis à des moyens de filtrage 161 de façon à en extraire les hautes fréquences, puis les deux signaux hautes fréquences sont comparés entre eux dans un dispositif de comparaison 162, qui délivre en sortie un signal de profondeur, 3, égal à la différence des deux signaux hautes fréquences. Ce signal de profondeur, 3, correspond aux zones où les hautes fréquences sont sensiblement absentes dans l'image à faible profondeur de champ par rapport à l'image visible. Ce signal de profondeur, nommé signal F-key permet de déterminer si un point de l'image appartient à des zones d'avant plan par rapport à des zones d'arrière plan ou par rapport à un fond car les hautes fréquences ne sont présentes que lorsqu'il y a des transitions raides dans l'image donc quand l'image est nette.

La figure 3 montre un deuxième exemple de réalisation du dispositif de calcul du signal de profondeur.

Dans ce dispositif de calcul, 16, le signal de sortie du capteur 15 et le signal de sortie de l'un des capteurs 12, 13, 14 sont traités numériquement de la façon suivante :
ces signaux sont d'abord numérisés selon les mêmes caractéristiques d'échantillonnage dans un dispositif de numérisation 163, puis traités en temps réel après leur avoir donné une représentation fréquentielle dans le dispositif de transformation fréquentielle 164, en utilisant par exemple une transformée rapide de Fourier, ou une transformée cosinus discrète, ou une transformée en ondelettes, etc...

Le traitement en temps réel des signaux numériques ainsi obtenus consiste en un filtrage numérique, effectué par un dispositif de filtrage numérique 165, de chacun des signaux pour en extraire les hautes fréquences, suivi d'une comparaison des deux signaux hautes fréquences dans un dispositif de comparaison 166, pour obtenir un signal de profondeur. Ce signal est alors remis dans le domaine spatial par le dispositif de transformation inverse, 167, qui effectue la transformée inverse de celle effectuée par le dispositif de transformation fréquentielle 164.

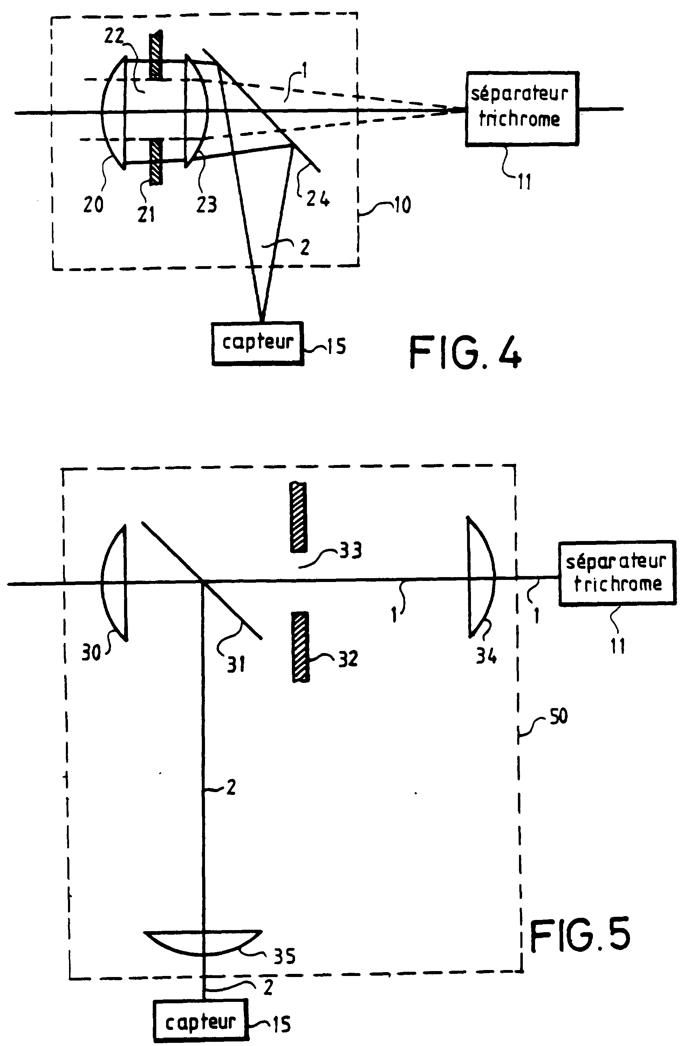

La figure 4 représente un premier mode de réalisation du dispositif optique, selon l'invention.

Selon un premier mode de réalisation de l'invention, le dispositif optique 10 comporte un objectif d'entrée 20, suivi d'un diaphragme 21 comportant une zone transparente à toutes les fréquences et une zone laissant passer sélectivement des fréquences optiques appartenant à une bande de fréquences étroite Δ f centrée sur une fréquence centrale fc. Ce diaphragme 21 est par exemple un filtre dichroïque annulaire comportant une zone centrale dite pupille 22 transparente à toutes les fréquences optiques et une zone annulaire opaque à toutes les fréquences n'appartenant pas à la bande de fréquences Δ f centrée sur la fréquence fc. Les dimensions relatives des zones opaque et transparente peuvent être soit fixes, soit réglables. Le réglage peut être effectué par exemple, à l'aide d'une roue porte filtre sur laquelle le filtre dichroïque est disposé ; le réglage peut également être obtenu par exemple, en utilisant un iris dont les volets sont des éléments filtrants dichroïques.

Le réglage de la pupille 22 du diaphragme 21 permet de faire varier la profondeur de champ du dispositif de prise de vue. Pour avoir une grande profondeur de champ et par conséquent une image uniformément nette, il faut fermer la pupille.

Le diaphragme 21 est suivi d'un oculaire 23 focalisant les rayons lumineux. En sortie de l'oculaire 23, est disposé un miroir 24, ce miroir 24 réfléchit sélectivement les fréquences optiques appartenant à la bande de fréquences Δ f centrée sur la fréquence optique fc et laisse passer toutes les autres fréquences optiques. Les fréquences optiques réfléchies par le miroir constituent le signal optique 2 qui est transmis au capteur 15. Les autres fréquences optiques constituent le signal optique 1 et sont transmises au séparateur trichrome 11.

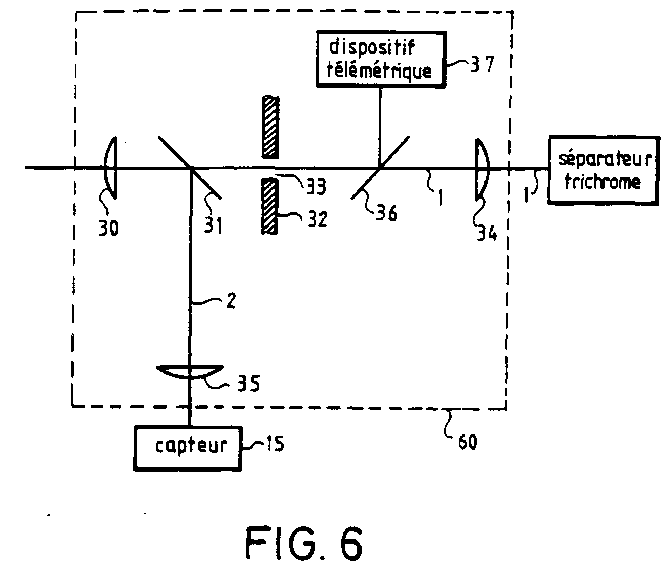

La figure 5 représente un deuxième mode de réalisation du dispositif optique, selon l'invention. Selon ce deuxième mode de réalisation, le dispositif optique 50 comporte un objectif d'entrée 30 suivi d'un miroir sélectif 31 réfléchissant les fréquences optiques appartenant à la bande de fréquences Δ f centrée sur la fréquence optique fc et laissant passer toutes les autres fréquences optiques. Ce miroir sélectif 31 sépare donc le trajet des rayons lumineux en deux trajets différents. Sur le trajet des rayons transmis par le miroir sélectif 31, noté trajet 1, est interposé un diaphragme 32 comportant une ouverture réglable dite pupille 33. Le réglage de la pupille 33 permet de faire varier la profondeur de champ du dispositif de prise de vue.

Les rayons lumineux diaphragmés sont alors transmis à un oculaire 34 qui les focalisent. Ces rayons lumineux sortant de l'oculaire 34 constituent le signal optique 1 qui est transmis au séparateur trichrome 11.

Les rayons lumineux réfléchis par le miroir sélectif 31 sont directement transmis à un oculaire 35 qui les focalisent. Ces rayons lumineux sortant de l'oculaire 35 constituent alors le signal optique 2 qui est transmis au capteur 15.

Les dispositifs optiques 10, 50 décrits ci-dessus en référence aux figures 4 et 5 permettent, en une seule prise de vue, d'obtenir deux images d'une scène éclairée suivant deux trajets optiques 1, 2 différents ; le trajet 1 est le trajet principal, le trajet 2 est un trajet dévié. Ces deux trajets optiques correspondent à deux faisceaux optiques qui sont obtenus, à partir d'un faisceau optique incident provenant de la scène éclairée, en déviant sélectivement les fréquences optiques appartenant à la bande de fréquences Δ f centrée sur la fréquence fc. Les deux images sont prises avec le même réglage de la mise au point, ce réglage étant effectué sur des zones d'avant plan, mais avec un réglage de profondeur de champ différent. Cette différence de profondeur de champ est obtenue en réalisant une différence d'ouverture optique entre les deux faisceaux optiques grâce à un diaphragme 21, 32 interposé sur le trajet optique 1 et dont l'ouverture 22, 33, dite pupille, est réglée de façon à obtenir une profondeur de champ plus grande sur le trajet optique 1 que sur le trajet optique 2. De cette façon l'image suivant le trajet 1 est uniformément nette et l'image suivant le trajet 2 comporte des zones d'avant plan nettes et des zones d'arrière plan floues.

Dans un tel dispositif, il est fondamental que le réglage de la 'mise au point sur les zones d'avant plan soit précis. De manière à éviter des erreurs éventuelles dans la mise au point du dispositif de prise de vue, un dispositif de mesure télémétrique 37 auxiliaire peut être disposé dans le dispositif optique.

La figure 6 montre un exemple de dispositif optique comportant un dispositif de mesure télémétrique. Conformément à la figure 6, le dispositif optique 60 comporte, sur le trajet optique 1 qui correspond à l'image de la scène éclairée proprement dite, un dispositif, par exemple un prisme 36, qui intercepte une partie du signal optique 1 et le transmet au dispositif de mesure télémétrique 37. Ce dispositif de mesure télémétrique délivre alors une information de distance du sujet principal dans la zone d'avant plan à conserver dans l'image, et effectue la mise au point de façon précise.

La fréquence centrale du signal réfléchi peut être choisie aussi bien dans le domaine visible que dans le domaine infrarouge proche, mais la préférence peut être donnée au domaine proche infrarouge, généralement éliminé par filtrage dans les caméras habituelles, de façon à ne pas perdre une partie de l'information de l'image de la scène, dans le domaine visible.

## Revendications

1. Procédé permettant d'obtenir une information de profondeur dans le champ vu par un dispositif de prise de vue, caractérisé en ce qu'il consiste :
- à extraire, d'une prise de vue, deux images d'une scène éclairée comportant des zones d'avant plan et des zones d'arrière plan, la profondeur de champ vue par le dispositif de prise de vue étant plus grande pour la première image que pour la deuxième image,
- à extraire, de chaque image, des composantes hautes fréquences correspondant à des transitions raides caractéristiques de la netteté des images, de façon à obtenir deux signaux hautes fréquences,
- à comparer les deux signaux hautes fréquences pour obtenir, par différence, un signal de profondeur.

2. Procédé selon la revendication 1, caractérisé en ce qu'il consiste, en outre, à régler la mise au point du dispositif de prise de vue sur les zones d'avant plan de la scène éclairée.

3. Procédé selon la revendication 2, caractérisé en ce que le domaine spectral de la première image est celui des fréquences visibles et le domaine spectral de la deuxième image est une bande de fréquences Δ f centrée sur une fréquence fc déterminée.

4. Procédé selon la revendication 3, caractérisé en ce que les deux images sont obtenues à partir d'un faisceau optique incident provenant de la scène éclatée, en déviant sélectivement les fréquences optiques appartenant à la bande de fréquences Δ f centrée sur la fréquence fc de façon à obtenir deux faisceaux optiques et en réalisant une différence d'ouverture optique entre les deux faisceaux optiques ainsi obtenus.

5. Procédé selon la revendication 3, caractérisé en ce que la fréquence centrale fc est située dans le domaine des fréquences visibles.

6. Procédé selon la revendication 3, caractérisé en ce que la fréquence centrale fc est située dans le domaine proche infra-rouge.

7. Procédé selon la revendication 3, caractérisé en ce que la bande de fréquences Δf est suffisamment étroite pour éviter des problèmes d'aberrations chromatiques.

8. Dispositif pour la mise en oeuvre du procédé selon l'une quelconque des revendications précédentes, caractérisé en ce qu'il comporte:
- un dispositif optique (10) destiné à recevoir en entrée des rayons lumineux provenant de la scène éclairée et à délivrer en sortie, un premier signal optique dans le domaine des fréquences visibles et un deuxième signal optique dans la bande de fréquences Δf centrée sur une fréquence fc, lesdits signaux correspondant à des nuvertures optiques différentes dudit dispositif optique,
- un séparateur trichrome (11) destiné à séparer les trois composantes spectrales rouge, vert, bleu, du premier signal optique pour constituer trois signaux primaires,
- quatre capteurs (12, 13, 14, 15) destinés à recevoir respectivement les trois signaux primaires correspondant aux trois composantes spectrales et le signal optique de bande de fréquences Δf et à délivrer en sortie les quatre signaux électriques correspondants,
- un dispositif de calcul (16) du signal de profondeur destiné à recevoir en entrée le signal électrique correspondant à l'un des signaux primaires, et le signal électrique correspondant au signal optique de bande de fréquence Δf,
- un dispositif de mise en forme et en phase (17) du signal de profondeur obtenu.

9. Dispositif selon la revendication 8, caractérisé en ce que le dispositif optique (10) comporte des moyens (24), (31) permettant de dévier sélectivement les fréquences optiques appartenant à la bande de fréquences Δf centrée sur la fréquence optique fc de façon à obtenir deux faisceaux optiques et des moyens (21, 22), (32, 33) permettant de faire varier l'ouverture optique entre les deux faisceaux optiques ainsi obtenus.

10. Dispositif selon la revendication 9, caractérisé en ce que le dispositif optique comporte un dispositif de mesure télémétrique (37) permettant d'effectuer un réglage de mise au point de façon précise.

## Patentansprüche

1. Verfahren, das es ermöglicht, eine Information über die Tiefe in dem von einer Aufnahmevorrichtung gesehenen Feld zu erhalten, dadurch gekennzeichnet, daß es darin besteht,
- aus einer Aufnahme zwei Bilder einer beleuchteten Szene herauszulösen, die Vordergrund-Bereiche und Hintergrund-Bereiche umfassen, wobei die von der Aufnahmevorrichtung gesehene Feldtiefe für das erste Bild größer ist als für das zweite Bild,
- aus jedem Bild Komponenten mit hohen Frequenzen herauszulösen, die schroffen Übergängen entsprechen, welche für die Schärfe der Bilder charakteristisch sind, so daß zwei Hochfrequenz-Signale erhalten werden,
- die beiden Hochfrequenz-Signale zu vergleichen, um aus der Differenz ein Tiefen-Signal zu erhalten.

2. Verfahren nach Anspruch 1, dadurch gekennzeichnet, daß es außerdem darin besteht, die Scharfeinstellung der Aufnahmevorrichtung auf die Vordergrund-Bereiche der beleuchteten Szene einzustellen.

3. Verfahren nach Anspruch 2, dadurch gekennzeichnet, daß der Spektralbereich des ersten Bildes der der sichtbaren Frequenzen ist und der Spektralbereich des zweiten Bildes ein um eine bestimmte Frequenz fc zentriertes Frequenzband Δf ist.

4. Verfahren nach Anspruch 3, dadurch gekennzeichnet, daß die beiden Bilder ausgehend von einem von der beleuchteten Szene stammenden einfallenden Lichtbündel erhalten werden, indem die dem um die Frequenz fc zentrierten Frequenzband Δf angehörenden optischen Frequenzen selektiv abgelenkt werden, so daß zwei Lichtbündel erhalten werden, und indem eine Differenz der optischen Öffnung zwischen den beiden so erhaltenen Lichtbündeln realisiert wird.

5. Verfahren nach Anspruch 3, dadurch gekennzeichnet, daß sich die zentrale Frequenz fc im Bereich der sichtbaren Frequenzen befindet.

6. Verfahren nach Anspruch 3, dadurch gekennzeichnet, daß sich die zentrale Frequenz fc im nahen Infrarotbereich befindet.

7. Verfahren nach Anspruch 3, dadurch gekennzeichnet, daß das Frequenzband Δf genügend schmal ist, um Probleme chromatischer Abweichungen zu vermeiden.

8. Vorrichtung für die Realisierung des Verfahrens nach einem der vorhergehenden Ansprüche, dadurch gekennzeichnet, daß sie folgendes umfaßt:
- eine optische Vorrichtung (10), die dazu bestimmt ist, am Eingang von der beleuchteten Szene stammende Lichtstrahlen zu empfangen und am Ausgang ein erstes optisches Signal im Bereich der sichtbaren Frequenzen und ein zweites optisches Signal in dem um eine Frequenz fc zentrierten Frequenzband Δf zu liefern, wobei die besagten Signale unterschiedlichen optischen Öffnungen der besagten optischen Vorrichtung entsprechen,
- einen Dreifarbentrenner (11), der dazu bestimmt ist, die drei Spektralkomponenten Rot, Grün, Blau des ersten optischen Signals zu trennen, um drei primäre Signale herzustellen,
- vier Geber (12, 13, 14, 15), die dazu bestimmt sind, die drei den drei Spektralkomponenten entsprechenden primären Signale bzw. das optische Signal des Frequenzbandes Δf zu empfangen und am Ausgang die vier entsprechenden elektrischen Signale zu liefern,
- eine Berechnungsvorrichtung (16) für das Tiefen-Signal, die dazu bestimmt ist, am Eingang das einem der primären Signale entsprechende elektrische Signal und das dem optischen Signal des Frequenzbandes Δf entsprechende elektrische Signal zu empfangen,
- eine Vorrichtung für die Formierung und Phaseneinstellung (17) des erhaltenen Tiefen-Signals.

9. Vorrichtung nach Anspruch 8, dadurch gekennzeichnet, daß die optische Vorrichtung (10) Mittel (24), (31) umfaßt, die es gestatten, die dem um die optische Frequenz fc zentrierten Frequenzband Δf angehörenden optischen Frequenzen selektiv abzulenken, so daß zwei Lichtbündel erhalten werden, und Mittel (21, 22), (32, 33), die es gestatten, die optische Öffnung zwischen den beiden so erhaltenen Lichtbündeln zu verändern.

10. Vorrichtung nach Anspruch 9, dadurch gekennzeichnet, daß die optische Vorrichtung eine telemetrische Meßvorrichtung (37) umfaßt, die es gestattet, eine präzise Einstellung der Scharfeinstellung vorzunehmen.

## Claims

1. Method making it possible to obtain information relating to depth in the field of view of a camera, characterized in that it consists:
- in extracting from a shot two images of an illuminated scene, including foreground zones and background zones, the depth of field of view of the camera being greater for the first image than for the second image,
- in extracting from each image high-frequency components corresponding to abrupt transitions characteristic of the sharpness of the images, so as to obtain two high-frequency signals,
- in comparing the two high-frequency signals in order to obtain a depth signal by subtraction.

2. Method according to Claim 1, characterized in that it further consists in focusing the camera on the foreground zones of the illuminated scene.

3. Method according to Claim 2, characterized in that the spectral range of the first image is the visible frequency range and the spectral range of the second image is a frequency band Δf centred on a determined frequency fc.

4. Method according to Claim 3, characterized in that the two images are obtained from an incident optical beam originating from the illuminated scene, by selectively deviating the optical frequencies belonging to the frequency band Δf centred on the frequency fc so as to obtain two optical beams and by producing an optical aperture difference between the two optical beams thus obtained.

5. Method according to Claim 3, characterized in that the central frequency fc lies in the visible frequency range.

6. Method according to Claim 3, characterized in that the central frequency fc lies in the near-infrared range.

7. Method according to Claim 3, characterized in that the frequency band Δf is sufficiently narrow to avoid chromatic aberration problems.

8. Device for implementing the method according to any one of the preceding claims, characterized in that it includes:
- an optical device (10) intended to receive, at its input, light rays originating from the illuminated scene and to deliver, at its output, a first optical signal in the visible frequency range and a second optical signal in the frequency band Δf centred on a frequency fc, the said signals corresponding to different optical apertures of the said optical device,
- a trichromic splitter (11) intended to split the three spectral components, red, green, blue, of the first optical signal in order to constitute three primary signals,
- four sensors (12, 13, 14, 15) intended respectively to receive the three primary signals corresponding to the three spectral components and the optical signal of frequency band Δf and to deliver, at its output, the four corresponding electrical signals,
- a device (16) for calculating the depth signal, which device is intended to receive, at its input, the electrical signal corresponding to one of the primary signals and the electrical signal corresponding to the optical signal of frequency band Δf,
- a device (17) for shaping and phase adjustment of the depth signal obtained.

9. Device according to Claim 8, characterized in that the optical device (10) includes means (24), (31) making it possible selectively to deviate the optical frequencies belonging to the frequency band Δf centred on the optical frequency fc so as to obtain two optical beams and means (21, 22), (32, 33) making it possible to vary the optical aperture between the two optical beams thus obtained.

10. Device according to Claim 9, characterized in that the optical device includes a telemetric measuring device (37) making it possible to carry out accurate control of focusing.
